# EUROPÄISCHE PATENTANMELDUNG

(11) **EP 1 352 868 A2**
(43) Veröffentlichungstag der Anmeldung: **15.10.2003**
(21) Anmeldenummer: 03012894.6
(22) Anmeldetag: 27.04.2000
(51) Int. Cl.: B65H 59/22, H01F 7/14, D03D 47/34, H02K 26/00

(54) **Aktuator**

(30) Priorität: 27.04.1999 DE 19919122
(62) Teilanmeldung aus: 00927096.8
(71) Anmelder: IROPA AG, 6340 Baar (CH)
(72) Erfinder: Birger, Johansson, 52333 Ulricehamn (SE)
(74) Vertreter: Grünecker, Kinkeldey, Stockmair & Schwanhäusser Anwaltssozietät

(57) **Zusammenfassung**

Ein Aktuator (A) für eine Bremsenkomponente einer Fadenbremse (B) zum variablen Bremsen eines laufenden Fadens (Y) hat ein Antriebsorgan (D) zum drehenden Verstellen der Komponente (2). Der Aktuator (A) ist ein reversibler Permanentmagnet-Motor (M), dessen magnetisch quer zur Drehachse polarisierter Anker (11) durchdringungsfrei mit wenigstens einer Spindel (26) drehgelagert ist.

## Beschreibung

Die Erfindung betrifft einen Aktuator gemäß Oberbegriff des Anspruchs 1.

Ein aus EP-A-0 597 239 bekannter Aktuator für eine Faden-Tellerbremse ist ein Permanentmagnet-Motor, der eine 360°-Drehbewegung der den Faden beaufschlagenden Komponente steuert. Die Stoppposition wird durch magnetische Kräfte definiert.

Der Erfindung liegt die Aufgabe zugrunde, einen schnellen und kleinbauenden Aktuator der eingangs genannten Art zu schaffen, der aus wenigen Bauteilen besteht, funktionssicher ist und ein schnelles Ansprechverhalten hat.

Die gestellte Aufgabe wird mit den Merkmalen des Anspruchs 1 gelöst.

Bei einem Permanentmagnet-Motor sollte im Hinblick auf schnelles Ansprechverhalten und hohe Leistung möglichst der Gesamtquerschnitt des Ankers für die elektromagnetische Polarisierung quer zur Drehachse nutzbar sein. Hingegen sollte die Ankerwelle für eine präzise Drehlagerung sorgen und bei möglichst geringem Drehwiderstand lange Lebensdauer garantieren. Dies sind an sich konträre Anforderungen. Um eine Durchdringung des Ankers durch die Ankerwelle zu vermeiden, weist ein Ankerwellenabschnitt einen Nabenteil auf, der ein Stirnende des Ankers topfartig übergreift oder in das Stirnende plattenförmig eingesetzt ist. Die Ankerwelle kann, da sie nicht aktiver Teil des Ankers sein braucht, im Hinblick auf Festigkeit und Funktionalität optimiert sein, während der nicht durchdrungene Anker für eine optimale Funktion auszulegen bzw. über seinen Gesamtquerschnitt zu polarisieren ist. Der Permanentmagnet-Motor ist aus wenigen Bauteilen mit hoher Funktionssicherheit und schnellem Ansprechverhalten herstellbar.

Zweckmäßig ist der Anker beidendig mittels koaxialer Spindeln drehgelagert, die jedoch den Anker nicht durchdringen. Dies vereinfacht die Herstellung des Permanentmagnet-Motors und verbessert dessen Arbeitsverhalten.

Anhand der Zeichnungen werden Ausführungsformen des Erfindungsgegenstandes erläutert. Es zeigen:
- Fig. 1: eine Perspektivansicht einer Fadenbremse mit einem als Permanentmagnet-Motor ausgebildeten Aktuator,
- Fig. 2: schematisch den Aufbau des Permanentmagnet-Motors in einem Querschnitt, und
- Fig. 3 + 4: zwei Detailausbildungen, jeweils in einem Achsschnitt.

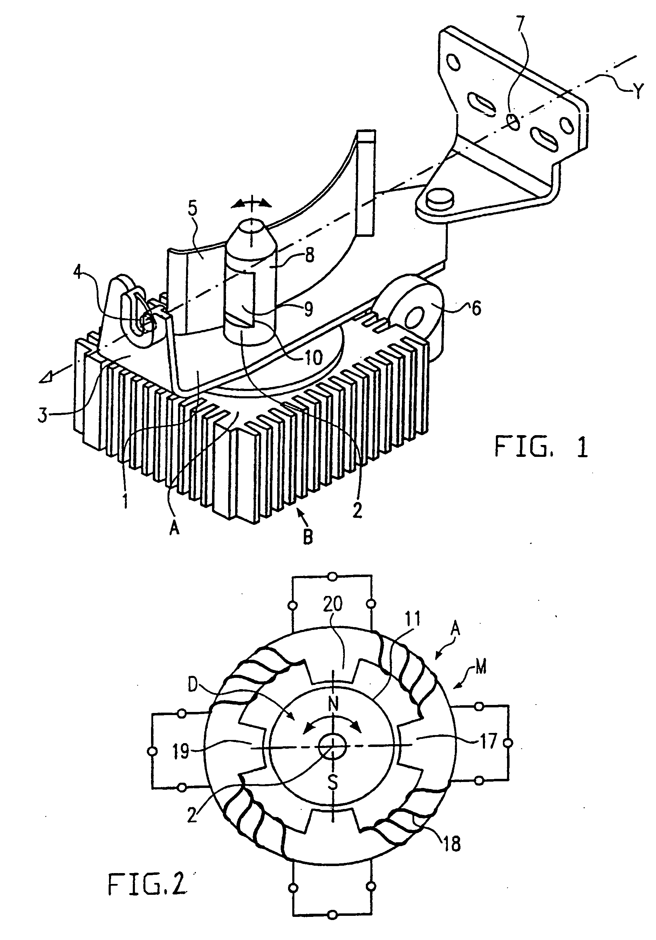

Bei einer in Fig. 1 gezeigten Fadenbremse B zum variablen Bremsen eines laufenden Fadens Y ist an einem Halter 1 als blockförmiger Aktuator ein Permanentmagnet-Motor befestigt, der eine Komponente 2 drehend um eine Drehachse antreibt. Fadenleitelemente 4, 7 bestimmen den Laufweg des Fadens Y durch die Fadenbremse B, wobei das Fadenleitelement 4 in einer Endwand 3 angeordnet ist. Am Halter 1 ist ferner als aktives Bremselement eine Federlamelle 5 so angebracht, dass sie mit bei 6 einstellbarem Anpressdruck elastisch nachgiebig gegen einen in die Komponente 2 integrierten zylindrischen Bremsteil 8 anliegt. In wenigstens einem Umfangsbereich der Komponente 2 ist ein vertieftes Fenster 9 ausgespart, das mit Übergängen 10 in den zylindrischen Bremsteil 8 übergeführt ist. Der Faden Y wird zwischen der Federlamelle 5 und der Komponente 2 durchgezogen. Je nach Drehposition der Komponente 2 wird der Faden Y zwischen 8 und 5 geklemmt und gebremst oder durch das Fenster 9 klemmungsfrei durchgezogen. Die Fadenbremse B wird verstellt durch Verdrehen der Komponente 2 mittels des Aktuators A über beispielsweise jeweils 90° in eine exakt definierte Position, so dass entweder der zylindrische Bremsteil 8 an der Federlamelle 5 anliegt, oder zwischen der Federlamelle 5 und dem Fenster 9 ein Freiraum vorliegt.

Die Komponente 2 (eine Art Spindel) ist mit einem magnetisch quer zur Drehachse polarisierten Anker 11 des Permanentmagnet-Motors M (der anhand der Fig. 2 bis 4 eingehend erläutert wird) als drehendes Antriebsorgan D verbunden. Für den Anker 11 bzw. die Komponente 2 sind in Gehäuseteilen Drehlager vorgesehen. Der Permanentmagnet-Motor M ist reversibel. Die Komponente 2 durchsetzt den Anker 11 nicht, sondern besitzt z.B. einen topfartigen Nabenteil 15, der auf den Anker 11 aufgesetzt ist und dessen Stirnende übergreift.

Im Permanentmagnet-Motor M in Fig. 2, der als Aktuator A einer Fadenbremse, z.B. der Fadenbremse der Fig. 1, dienen kann, ist der Anker 11 ein quer zur Drehachse magnetisch polarisierter Permanentmagnet mit einem magnetischen Nordpol N und einem magnetischen Südpol S. Der Anker 11 ist mittels der Komponente 2 in Gehäuseteilen drehgelagert. Der Anker 11 wird umgeben von einem ringförmigen Kern 17 einer Erregerspule 18. Die Erregerspule 18 besteht aus mehreren Teilwicklungen entsprechend der Schrittzahl des Permanentmagnet-Motors, im vorliegenden Fall aus mindestens zwei Teilwicklungen. Den Schrittstellungen des Ankers 11 zugeordnet, weist der Spulenkern 17 der Erregerspule 18 gegenüberliegende Polpaare 19, 20 auf. Zwischen diesen Polpaaren orientiert sich der Anker 11 entsprechend der Polarisierung der Erregerspule 18. Gegenüberliegende Teilwicklungen werden gleichsinnig polarisiert, um eine zum Ankermagnetfeld parallele Magnetisierung aufzubauen. Soll der Anker um 90°verdreht werden, so wird das quer zum ersten Polpaar liegende zweite Polpaar entsprechend magnetisiert. Dann werden die zwischen diesen Polen liegenden Teilwicklungen in gleicher Richtung vom Strom durchflossen, so dass ein zwischen diesen Magnetpolen ausgerichtetes Magnetfeld entsteht. Der Anker orientiert sich entsprechend dem gedrehten Magnetfeld in die neue Drehposition. Auf diese Weise wird der Anker hin- und hergedreht.

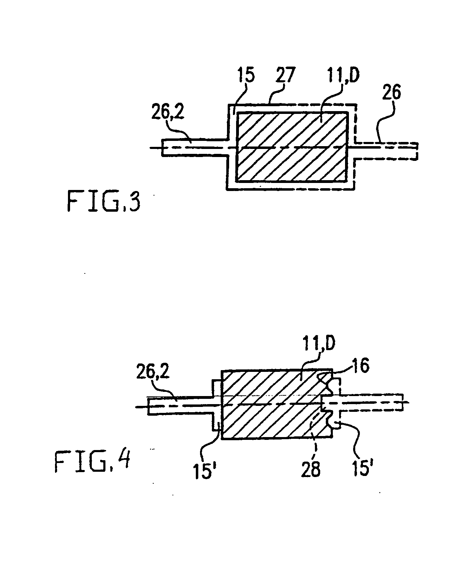

In Fig. 3 ist der Anker 11 mit dem Nabenteil 15 der Komponente 2 bzw. mit Nabenteilen 15 zweier spindelartiger Wellen 26 verbunden, ohne dass die Komponente 2 oder die Wellen 26 den Anker 11 durchdringen. Der Zweck der Nabenteile 15 ist es, den Anker 11 ordnungsgemäß drehzulagern, ohne ihn zu durchdringen. Die beiden Nabenteile 15 können den zylindrisch ausgebildeten Anker 11 über seine gesamte Länge übergreifen. Der Durchmesser des Ankers 11 ist - wie aus Fig. 3 und 4 ersichtlich - kleiner als seine axiale Länge.

In Fig. 4 ist jede Ankerwelle 26 bzw. die Komponente 2 mit einem Nabenteil 15' versehen, der an oder in eine Stirnseite 16 des Ankers 11 eingesetzt ist, wofür formschlüssige Eingriffselemente 28 benutzt werden können.

## Patentansprüche

1. Aktuator (A), mit einem einen magnetisch quer zur Drehachse polarisierten, drehgelagerten Anker (11) aufweisenden Permanentmagnet-Motor, insbesondere für eine drehbare Komponente (2) einer Fadenbremse zum variablen Bremsen eines laufenden Fadens, wobei dem Anker (11) eine Erregerspule (18) mit mehreren, einem Kem (17) zugeordneten Teilwicklungen zugeordnet ist, **dadurch gekennzeichnet, dass** die Komponente (2) eine den Anker (11) drehlagernde, wellenartige Spindel (26) ist, die einen Nabenteil (15) aufweist, der entweder ein Stimende (16) des Ankers (11) topfartig fasst oder in das Stirnende (16) eingesetzt ist.

2. Aktuator nach Anspruch 1, **dadurch gekennzeichnet, dass** die Spindel (26) durchdringungsfrei mit einem Nabenteil (15, 15') am Anker (11) befestigt ist, wobei der Nabenteil (15) entweder topfartig das Stirnende (16) des Ankers (11) fasst oder scheibenartig (15') in die Stirnseite (16) eingesetzt ist.

3. Aktuator nach Anspruch 1, **dadurch gekennzeichnet, dass** der Anker (11) beidendig mittels koaxialer wellenartiger Spindeln (26) drehgelagert ist.

4. Aktuator nach Anspruch 3, **dadurch gekennzeichnet, dass** die Spindeln (26) beiderseits des Ankers (11) in Drehlagem in Permanentmotorgehäuseteilen gelagert sind.
